# FASCICULE DE BREVET EUROPEEN

(11) **EP 3 025 353 B1**
(45) Date de publication et mention de la délivrance du brevet: **03.10.2018**
(21) Numéro de dépôt: 14747874.7
(22) Date de dépôt: 22.07.2014
(51) Int. Cl.: G21C 15/243, G21D 1/04, F16J 15/34

(54) **GLACE POUR GARNITURE D'ETANCHEITE POUR SYSTEME D'ETANCHEITE D'ARBRE**
AKTIVE OBERFLÄCHE FÜR EINE PACKUNGSDICHTUNG FÜR EIN WELLENDICHTUNGSSYSTEM
ACTIVE SURFACE FOR A PACKING SEAL INTENDED FOR A SHAFT SEALING SYSTEM

(30) Priorité: 24.07.2013 FR 1357301
(43) Date de publication de la demande: 01.06.2016
(73) Titulaire: FRAMATOME, 92400 Courbevoie (FR)
(72) Inventeur: TEBBY, Zoé, 59198 Haspres (FR)
(74) Mandataire: Cabinet Camus Lebkiri
(86) Numéro de dépôt international: PCT/EP2014/065727
(87) Numéro de publication internationale: WO 2015/011142

(56) Documents cités:
- WO-A1-2012/079658
- US-A- 4 841 408
- US-A- 6 149 160
- US-A1- 2011 101 616

## Description

### DOMAINE TECHNIQUE

Le domaine de l'invention est celui des groupes motopompes primaires de réacteurs nucléaires à eau sous pression (REP). Plus précisément, la présente invention concerne les glaces, également appelées faces actives, de la garniture mécanique d'étanchéité principale du groupe motopompe primaire.

### ETAT DE LA TECHNIQUE ANTERIEUR

Dans les réacteurs nucléaires, la pompe primaire génère la circulation d'eau dans le circuit primaire des réacteurs à eau sous pression. Un système d'étanchéité dynamique d'arbre assure l'étanchéité entre le circuit primaire et l'atmosphère. Ce système d'étanchéité d'arbre est un système à fuite contrôlée. Il comporte trois joints disposés en série. Chaque joint comporte deux glaces qui assurent l'étanchéité principale. Une des glaces, appelée glace tournante, est montée dans un ensemble tournant solidaire de l'arbre, l'autre glace, dite flottante, est montée dans un ensemble ne tournant pas mais libre de se déplacer axialement pour suivre les déplacements axiaux éventuels de l'arbre.

Le joint n°1 assure la plus grande partie de la chute de pression entre le circuit primaire et l'atmosphère. Il est de type hydrostatique, à film d'eau d'une épaisseur de l'ordre de 10 µm. La géométrie particulière des faces des glaces assurant l'étanchéité principale permet, à l'arrêt comme en rotation, l'ajustement automatique de leur écartement qui ne dépend que du ΔP du joint. Les glaces étaient initialement en alumine, mais elles sont de plus en plus souvent en nitrure de silicium, plus résistant au frottement.

Le joint 1 fonctionne avec un débit de fuite maitrisé, de l'ordre de 600 l/h en fonctionnement, grâce au profile spécifique usiné sur ses faces actives. Il permet de passer d'une pression de 155 bars à une pression de 2 bars environ.
Toutefois, dans les joints n°1 de l'art antérieur, on a constaté qu'un important dépôt d'oxyde de fer encrasse les faces actives et modifie la pente de ces faces, ce qui conduit à une modification du débit de fuite.
Le document « Deposition of hematite particles on alumina seal faceplates of nuclear reactor coolant pumps-laboratory experiments and industrial feedback" par Gregory Lefèvre, Ljiljana S. Zivkovic and Anne Jaubertie, Hem. Ind., 2012, explique que ce phénomène d'encrassement est dû à un phénomène en deux étapes :
- Les particules sont transportées de la solution vers les glaces par des phénomènes hydrodynamique, électrophorétique et thermophorétique ;
- Puis elles adhèrent sur les faces d'étanchéité par des interactions physico-chimiques. Dans l'art antérieur, ces interactions sont considérées comme étant essentiellement dues au fait que les particules d'hématite sont chargées positivement, tandis que les surfaces des glaces sont chargées négativement.
Pour remédier à ce problème, le document US 7,287,756 propose d'ajouter un catalyseur à la surface des glaces. Ce catalyseur est de préférence un ou un mélange des composés suivants : rhénium, ruthénium, rhodium, palladium, argent, osmium, iridium, platine, or. D'après le document US 7,287,756, le fer est présent en solution sous forme de FeOOH (goethite) et d'ions Fe²⁺. La goethite se déposerait à la surface des garnitures. En parallèle, les ions Fe²⁺ seraient oxydés par le dioxygène en ions Fe³⁺ qui précipiteraient et consolideraient le dépôt. Le dépôt évoluerait ensuite en hématite (Fe₂O₃). L'utilisation de catalyseurs permettrait de dissocier le dihydrogène présent, avec pour conséquence de diminuer le potentiel chimique, d'empêcher l'oxydation des ions Fe²⁺ et de réduire les ions Fe³⁺ présents en Fe²⁺, empêchant de ce fait le dépôt d'oxyde d'avoir lieu.
La demanderesse a identifié un autre mécanisme de formation du dépôt d'oxyde sur les faces des glaces. Nous proposons donc une solution qui prend en compte ce mécanisme de formation.

US 2011/101616 divulgue une composante annulaire d'une garniture d'étanchéité hydrodynamique dont la surface est en SiC.

### EXPOSE DE L'INVENTION

L'invention consiste dans une garniture d'étanchéité hydrostatique selon l'objet de la revendication 1. L'invention vise à remédier aux inconvénients de l'état de l'art de la technique en proposant une solution efficace pour empêcher l'encrassement des glaces du joint n°1 du système d'étanchéité d'arbre du groupe motopompe primaire d'un réacteur nucléaire.
Pour ce faire, l'invention propose de recouvrir la surface des glaces du joint n°1 d'un revêtement qui empêche les ions Fe²⁺ de s'adsorber à la surface des glaces.
En effet, les expérimentations de la demanderesse ont montré que la présence simultanée de Fe²⁺ et de particules d'hématite était nécessaire à la formation du dépôt. Le dépôt ne s'effectue que dans des domaines du diagramme de Pourbaix où le Fe²⁺ est l'espèce thermodynamiquement stable, la cinétique faisant que les particules d'hématite sont toujours présentes. De plus, il a été démontré que le dépôt a lieu sur une surface basse énergie, faible donneur d'électrons. Il a été observé par exemple sur le PFA, perfluoroalcoxy, possédant une énergie de surface totale inférieure à 20 mJ/m² et une composante donneur d'électrons inférieur à 5 mJ/m². Le dépôt a également lieu sur une surface haute énergie et forte composante donneur d'électrons comme le nitrure de silicium qui présente une énergie de surface totale de 50 mJ/m² et une composante donneur d'électrons de 56 mJ/m². En revanche, le dépôt est fortement retardé sur une surface de diamant microcristallin de haute énergie (50 mJ/m²) et à composante faible donneur d'électrons (3 mJ/m²).

Pour la définition des paramètres *énergie de surface* et *composante donneur d'électrons* cf e.g. "Adhésion under water: surface energy considérations", Clint et al., International Journal of adhésion and adhesives, 2001, cf. page 271: équations 9 et 10, et/ ou "Development of improved polypropylene adhesive bonding by abrasion and atmospheric plasma surface modifications", Encinas et al., International Journal of adhésion and adhesives, 2012, page 2: équations 4 et 5.

Plus précisément, l'invention propose une glace pour système d'étanchéité d'arbre de groupes motopompes primaires de réacteurs nucléaires destinée à assurer l'étanchéité entre le circuit primaire et l'atmosphère, la glace présentant une surface recouverte par une couche protectrice réalisée dans un matériau présentant une énergie de surface supérieure à 30 mJ/m² et une composante donneur d'électrons inférieure à 15 mJ/m².

Le fait de recouvrir la surface des glaces avec un matériau présentant une énergie de surface supérieure à 30 mJ/m² et une composante donneur d'électrons inférieure à 15 mJ/m² permet d'éviter que les ions Fe²⁺ ne soient adsorbés sur la surface des glaces. En effet, contrairement au phénomène d'accroche décrit dans les documents de l'art antérieur, les particules d'hématite ne s'accrochent pas directement à la surface des glaces, mais elles s'accrochent aux ions Fe²⁺ qui sont eux-mêmes adsorbés à la surface des glaces. En effet, les ions Fe²⁺ sont attirés par la surface négative et donneuse d'électrons des glaces. Le Fe²⁺ est un acide de Lewis, il réagit avec les groupements oxygène présents sur la surface des glaces et peut à son tour réagir avec du Fe₂O₃ colloïdale ou particulaire qui possède une forte composante donneur d'électrons. Les ions Fe²⁺ peuvent alors s'adsorber à la surface des particules d'hématite et la réaction continue en chaine, ce qui provoque l'encrassement des glaces. Par conséquent, pour empêcher l'encrassement des glaces, la demanderesse propose d'éviter que les ions Fe²⁺ ne s'adsorbent à la surface des glaces en recouvrant cette surface d'une couche protectrice.

La glace selon l'invention peut également présenter une ou plusieurs des caractéristiques ci-après prises individuellement ou selon toutes les combinaisons techniquement possibles.

La glace peut être une glace flottante ou une glace tournante.

Le matériau choisi pour la couche protectrice présente de préférence une énergie de surface supérieure à 35 mJ/m², et plus préférentiellement supérieure à 37 mJ/m², et encore plus avantageusement supérieure à 50 mJ/m². En effet, plus l'énergie de surface du matériau choisi est importante, plus la surface sera hydratée avec un film d'eau liée qui écrante la surface des ions Fe²⁺ et empêche leur adsorption. Le matériau choisi pour la couche protectrice présente de préférence une composante donneur d'électrons inférieur à 10 mJ/m² et plus préférentiellement inférieure à 5 mJ/m² afin de limiter les interactions avec les ions Fe²⁺ et d'empêcher leur adsorption. La composante donneur d'électrons ou composante basique est déterminée par angle de contact avec 3 liquides : un liquide bipolaire, monopolaire et apolaire.

Selon un mode de réalisation, le matériau choisi pour la couche protectrice est du diamant nano- ou microcristallin, qui présente une énergie de surface de 50 mJ/m² et une composante donneur d'électrons faible de 3 mJ/m².

Selon un autre mode de réalisation, le matériau choisi pour la couche protectrice est du nitrure de titane (TiN) avec une énergie totale de surface de 44 mJ/m² et une composante donneur d'électrons de 0,3 mJ/cm².

Selon un autre mode de réalisation, le matériau choisi pour la couche protectrice est du nitrure de chrome (CrN) avec une énergie totale de surface de 41 mJ/m² et une composante donneur d'électrons de 0,4 mJ/cm².

Selon un autre mode de réalisation, le matériau choisi pour la couche protectrice est du nickel chimique (Ni), qui présente une énergie de surface de 33 mJ/m² et une composante donneur d'électrons de 9 mJ/m².

Selon un autre mode de réalisation, le matériau choisi pour la couche protectrice est du carbure de silicium (SiC). En effet, en fonction de sa composition, ce matériau peut présenter une énergie de surface suffisamment élevée pour empêcher les ions Fe²⁺ d'être attirés par la surface des glaces et une composante donneur d'électrons suffisamment basse pour limiter les interactions entre les ions Fe²⁺ et la surface.

L'invention n'est pas limitée aux couches citées.

Avantageusement, la couche protectrice présente une épaisseur supérieure à 100 nm de façon à être continue, et inférieure à 100 µm de façon à diminuer le risque de fissure et de limiter les perturbations en cas de décrochage. La couche est de préférence d'une épaisseur entre 1 et 5 µm.

Avantageusement, les glaces sont réalisées en nitrure de silicium.

La surface de chaque glace destinée à être en contact avec un film d'eau est de préférence entièrement recouverte par la couche protectrice.

Selon un mode de réalisation, la glace peut en outre être recouverte d'une couche d'accroche disposée entre la couche protectrice et la surface de la glace. Cette couche d'accroche permet d'améliorer l'accroche de la couche protectrice. La composition de la couche d'accroche dépend de la composition de la couche protectrice.

Selon un mode de réalisation, la surface de la glace, et plus précisément de la couche protectrice, est en outre micro- ou nanostructurée par un réseau d'aspérités, ces aspérités pouvant être des trous ou des piliers.

Chaque trou possède des dimensions latérales entre 10 nm et 5 µm, et une profondeur de 10 nm à 5 µm. La distance entre deux trous consécutifs étant comprise entre 10 nm et 5 µm.

Chaque pilier possède des dimensions latérales entre 10 nm et 5 µm. Le facteur de forme c'est-à-dire le rapport hauteur/dimension latérale, doit être de préférence inférieur à 2 et plus préférentiellement inférieur à 1 afin d'éviter des phénomènes d'érosion. La distance entre deux piliers consécutifs est comprise entre 10 nm et 5 µm.

Cette micro- ou nanostructuration permet d'empêcher les particules de Fe₂O₃ de s'accrocher aux ions Fe²⁺ en limitant les points d'accroche dans le cas où des ions Fe²⁺ se seraient malgré tout accrochés à la surface de la couche protectrice.

Selon un mode de réalisation, la surface d'au moins une des glaces, et plus précisément de la couche protectrice peut en outre posséder une structuration hiérarchique. Des microstructures de dimensions latérales comprises entre 500 nm et 5 µm et de préférence entre 1 µm et 2 µm peuvent être recouvertes de nanostructures de dimensions latérales comprises entre 10 nm et 200 nm et de préférence entre 50 nm et 100 nm. Cette double structuration permet également de diminuer les points d'accroche des particules de Fe₂O₃ dans le cas où des ions Fe²⁺ se seraient malgré tout accrochés à la surface de la couche protectrice.

Un autre aspect de l'invention concerne également une garniture d'étanchéité comportant au moins une glace selon le premier aspect de l'invention.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en coupe d'un système d'étanchéité à arbre selon un mode de réalisation de l'invention ;
- La figure 2, une vue schématique d'un joint n°1 selon un mode de réalisation de l'invention ;
- La figure 3, une représentation schématique du phénomène d'encrassement d'une glace de joint ;
- La figure 4, une représentation schématique en coupe des glaces du joint n°1 selon un mode de réalisation de l'invention ;
- La figure 5, une représentation schématique en coupe des glaces du joint n°1 selon un autre mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

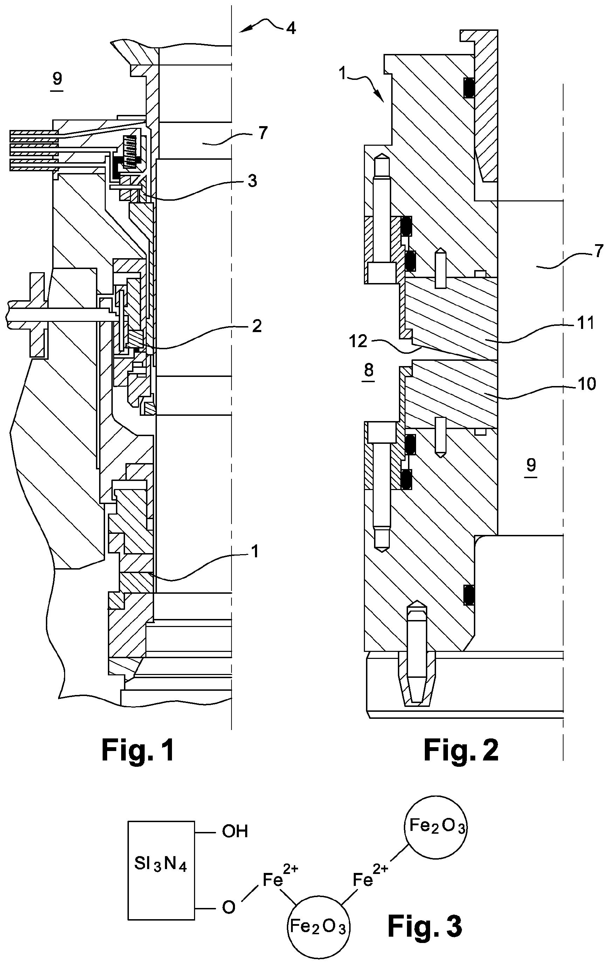

La figure 1 représente un système de garnitures mécaniques d'étanchéité d'arbre 4 de groupe motopompe primaire d'un réacteur nucléaire. Ce système d'étanchéité d'arbre comporte un joint n°1 référencé 1 sur la fgure, un joint n°2 référencé 2 sur la figure, un joint n°3 référencé 3 sur la figure. Chaque joint 1, 2, 3 se compose d'une glace tournante solidaire de l'arbre 7 et d'une glace flottante pouvant suivre les déplacements axiaux de l'arbre 7 mais ne tournant pas.

Le joint n°1 est représenté plus précisément sur la figure 2. Le joint n°1 assure la plus grande partie de la chute de pression entre le circuit primaire 8 et l'atmosphère 9. Le joint n°1 est de type hydrostatique, à film deau d'une épaisseur de l'ordre de 10 µm. Le joint n°1 comporte une glace tournante 10 solidaire de l'arbre 7 et une glace flottante 11 qui peut suivre les déplacements axiaux de l'arbre 7. Le débit de fuite du joint n°1 est déterminé par la double pente de la glace flottante 11 ou par les pentes des glaces tournant 10 et flottante 11. Les glaces sont en nitrure de silicium Si3N4.

Le processus d'encrassement des glaces 10, 11 en l'absence des caractéristiques de l'invention est expliqué sur la figure 3. De l'eau circule entre les glaces 10, 11. Cette eau apporte des ions Fe²⁺ qui s'adsorbent préférentiellement à la surface des glaces en Si₃N₄. Le Fe²⁺ est un acide de Lewis, il réagit avec les groupements oxygène présents sur la surface des glaces et peut à son tour réagir avec du Fe₂O₃ colloïdale ou particulaire qui possède une forte composante donneur d'électrons. Les ions Fe²⁺ peuvent alors s'adsorber à la surface des particules d'hématite et la réaction continue en chaine, ce qui provoque l'encrassement des glaces.

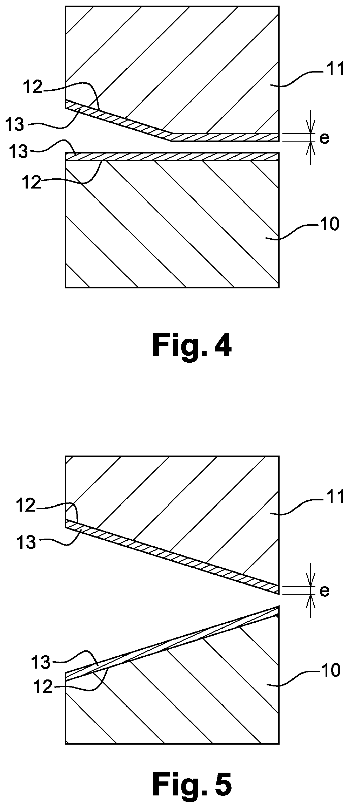

Pour éviter ce processus d'encrassement, en référence aux figures 4 et 5, la surface 12 d'au moins une des glaces 10, 11 est recouverte d'une couche protectrice 13. Cette couche protectrice 13 est réalisée dans un matériau sur lequel les ions Fe²⁺ ne s'adsorbent pas ou peu. Pour cela, la couche protectrice 13 est réalisée dans un matériau présentant une énergie de surface supérieure à 30 mJ/m² et une composante donneur d'électrons inférieure à 15 mJ/m².

La couche protectrice peut ainsi être réalisée en diamant nano- ou microcristallin, qui présente une énergie de surface de 50 mJ/m² et une composante donneur d'électrons faible de 3 mJ/m².

Un jeu de glaces recouvertes par une couche de carbone sous forme de diamant microcristallin d'une épaisseur de 2 µm a été testé sur une maquette simulant le dépôt en conditions réelles. Pour des glaces brutes en nitrure de silicium de l'art antérieur, le dépôt d'oxyde de fer apparaît après 250h. Lorsque les glaces sont recouvertes de la couche de carbone sous forme de diamant microcristallin d'une épaisseur de 2 µm, le dépôt n'apparait qu'après 750h. Dans ce cas le dépôt est fortement réduit visuellement par rapport à une glace en nitrure de silicium testé pendant 250h.

La couche protectrice peut également être réalisée en nitrure de titane qui présente une énergie totale de surface de 44 mJ/m² et une composante donneur d'électrons de 0,3 mJ/cm².

La couche protectrice peut également être réalisée en nitrure de chrome qui présente une énergie totale de surface de 41 mJ/m² et une composante donneur d'électrons de 0,4 mJ/cm².

La couche protectrice peut également être réalisée en nickel chimique, qui présente une énergie de surface de 33 mJ/m² et une composante donneur d'électrons de 9 mJ/m². Lorsque la couche protectrice est réalisée en nickel, une couche d'accroche est de préférence disposée entre la surface des glaces et la couche protectrice de façon à améliorer la tenue de la couche protectrice et à amorcer la réaction autocatalytique de dépôt de nickel. Cette couche d'accroche est de préférence réalisée en platine ou en palladium.

La couche protectrice peut également être réalisée en carbure de silicium (SiC). Le carbure de silicium peut présenter une énergie de surface variable en fonction de sa composition, de sorte que la composition du carbure de silicium est choisie de façon à présenter une énergie de surface supérieure à 30 mJ/m² et une composante donneur d'électrons suffisamment bas.

Le matériau ne se limite pas à ceux cités précédemment.

La couche protectrice présente de préférence une épaisseur e supérieure à 100 nm de façon à être continue, et inférieure à 100 µm de façon à diminuer le risque de fissure et de limiter les perturbations en cas de décrochage. Le dépôt est de préférence d'une épaisseur entre 1 et 5 µm.

Par ailleurs, la couche protectrice peut être micro- ou nanostructurée par un réseau de trous ou de piliers.

Chaque trou possède des dimensions latérales entre 10 nm et 5 µm, et une profondeur de 10 nm à 5 µm. La distance entre deux trous consécutifs étant comprise entre 10 nm et 5 µm.

Chaque pilier possède des dimensions latérales entre 10 nm et 5 µm. Le facteur de forme (rapport hauteur/dimension latérale) doit être de préférence inférieur à 2 et plus préférentiellement inférieur à 1 afin d'éviter des phénomènes d'érosion. La distance entre deux piliers consécutifs étant comprise entre 10 nm et 5 µm
Cette micro- ou nanostructuration permet d'empêcher les particules de Fe₂O₃ de s'accrocher aux ions Fe²⁺ en limitant les points d'accroche dans le cas où des ions Fe²⁺ se seraient malgré tout accrochés à la surface de la couche protectrice.

La micro- ou nanostructuration de la couche protectrice peut être réalisée par lithographie en utilisant un masque de micro- ou nanoparticules ou encore des copolymères à bloc ou par tout autre procédé de micro- ou nanostructuration connu.

La structuration peut être hiérarchique en combinant des microstructures et des nanostructures.

Dans le cas de la nano- ou microstructuration, la couche protectrice est de préférence mise en place puis structurée.

Naturellement l'invention n'est pas limitée aux modes de réalisation décrits en référence aux figures et des variantes pourraient être envisagées sans sortir du cadre de l'invention. On pourrait notamment utiliser d'autres matériaux que ceux cités dans la description détaillée.

## Revendications

1. Garniture d'étanchéité (1) hydrostatique pour système d'étanchéité (4) d'arbre (7) de groupe motopompe primaire de réacteur nucléaire, destiné à assurer l'étanchéité entre le circuit primaire (8) et l'atmosphère (9), la garniture d'étanchéité comportant une glace (10, 11), **caractérisée en ce que** la glace présente une surface (12) recouverte par une couche protectrice (13) réalisée dans un matériau présentant une énergie de surface supérieure à 30 mJ/m² et une composante donneur d'électrons inférieure à 15 mJ/m².

2. Garniture d'étanchéité (1) selon la revendication précédente, dans laquelle le matériau de la couche protectrice (13) présente une énergie de surface supérieure à 35 mJ/m² et de préférence supérieure à 37 mJ/m² et plus avantageusement supérieure à 50 mJ/m².

3. Garniture d'étanchéité (1) selon l'une des revendications précédentes, dans laquelle le matériau de la couche protectrice (13) présente une composante donneur d'électrons inférieure à 10 mJ/m² et plus avantageusement inférieure à 5 mJ/m².

4. Garniture d'étanchéité (1) selon l'une des revendications précédentes, dans laquelle la couche protectrice (13) est réalisée dans un des matériaux suivants : carbure de silicium, nitrure de titane, nitrure de chrome, nickel, diamant micro- ou nanocristallin.

5. Garniture d'étanchéité (1) selon l'une des revendications précédentes, dans laquelle la couche protectrice (13) présente une épaisseur (e) comprise entre 100 nm et 100 µm.

6. Garniture d'étanchéité (1) selon l'une des revendications précédentes, dans laquelle la glace est en outre recouverte d'une couche d'accroche disposée entre la couche protectrice (13) et la surface (12) de la glace (10, 11).

7. Garniture d'étanchéité (1) selon l'une des revendications précédentes, dans laquelle la surface (12) d'au moins une des glaces est en outre micro- ou nanostructurée par un réseau d'aspérités, chaque aspérité présentant des dimensions latérales comprises entre 10 nm et 5 µm, une hauteur comprise entre 10 nm à 5 µm, la distance entre deux aspérités consécutives étant comprise entre 10 nm et 5 µm.

## Patentansprüche

1. Hydrostatische abdichtung (1) für Dichtungssystem (4) einer Welle (7) einer primären Motorpumpengruppe eines Kernreaktors, das bestimmt ist, die Dichtigkeit zwischen dem Primärkreis (8) und der Atmosphäre (9) zu gewährleisten, wobei die Abdichtung ein Glas (10, 11) aufweist adurch gekennzeichnet, das Glas eine von einer Schutzschicht, aufweisend eine Oberflächenenergie über 30 mJ/m² und eine Elektronendonorkomponente unter 15 mJ/m², bedeckte Oberfläche (12) aufweist.

2. Hydrostatische abdichtung (1) nach vorangehendem Anspruch, wobei das Material der Schutzschicht (13) eine Oberflächenenergie über 35 mJ/m² und vorzugsweise über 37 mJ/m² und vorteilhafter über 50 mJ/m² aufweist.

3. Hydrostatische abdichtung (1) nach einem der vorangehenden Ansprüche, wobei das Material der Schutzschicht (13) eine Elektronendonorkomponente unter 10 mJ/cm² und vorteilhafter unter 5 mJ/m² aufweist.

4. Hydrostatische abdichtung (1) nach einem der vorangehenden Ansprüche, wobei die Schutzschicht (13) aus einem der folgenden Materialien hergestellt ist: Siliciumcarbid, Titannitrid, Chromnitrid, Nickel, mikro- oder nanokristalliner Diamant.

5. Hydrostatische abdichtung (1) nach einem der vorangehenden Ansprüche, wobei die Schutzschicht (13) eine Stärke (e) zwischen 100 nm und 100 µm inklusive aufweist.

6. Hydrostatische abdichtung (1) nach einem der vorangehenden Ansprüche, wobei das Glas ferner mit einer Haftschicht bedeckt ist, die zwischen der Schutzschicht (13) und der Oberfläche (12) des Glases (10, 11) angeordnet ist.

7. Hydrostatische abdichtung (1) nach einem der vorangehenden Ansprüche, wobei die Oberfläche (12) mindestens eines der Gläser ferner durch ein Unebenheitsnetz mikro- oder nanostrukturiert ist, wobei jede Unebenheit seitliche Dimensionen zwischen 10 nm und 5 µm inklusive, eine Höhe zwischen 10 nm bis 5 µm inklusive aufweist, wobei der Abstand zwischen zwei aufeinanderfolgenden Unebenheiten zwischen 10 nm und 5 µm inklusive ist.

## Claims

1. A hydrostatic packing seal (1) for a shaft (7) sealing system (4) of a primary motorpump unit of a nuclear reactor, for sealing between the primary circuit (8) and the atmosphere (9), the hydrostatic packing seal having a active surface (10, 11) **characterised in that** the active surface (10, 11) has a surface (12) covered with a protective layer (13) made of a material having a surface energy greater than 30 mJ/m² and an electron donor component lower than 15 mJ/m².

2. The hydrostatic packing seal (1) according to the previous claim, wherein the material of the protective layer (13) has a surface energy greater than 35 mJ/m² and preferably greater than 37 mJ/m² and more advantageously greater than 50 mJ/m².

3. The hydrostatic packing seal (1) according to one of the previous claims, wherein the material of the protective layer (13) has an electron donor component lower than 10 mJ/m² and more advantageously lower than 5 mJ/m².

4. The hydrostatic packing seal (1) according to one of the previous claims, wherein the protective layer (13) is made of one of the following materials: silicon carbide, titanium nitride, chromium nitride, nickel, micro- or nanocrystalline diamond.

5. The hydrostatic packing seal (1) according to one of the previous claims, wherein the protective layer (13) has a thickness (e) comprised between 100 nm and 100 µm.

6. The hydrostatic packing seal (1) according to one of the previous claims, wherein the active surface is further covered with an adhesion layer disposed between the protective layer (13) and the surface (12) of the active surface (10, 11).

7. The hydrostatic packing seal (1) according to one of the previous claims, wherein the surface (12) of at least one of the active surfaces is further micro- or nanostructured by an array of asperities, each asperity having lateral dimensions comprised between 10 nm and 5 µm, a height comprised between 10 nm and 5 µm, the distance between two consecutive asperities being comprised between 10 nm and 5 µm.
